# EUROPÄISCHE PATENTSCHRIFT

(11) **EP 0 366 053 B1**
(45) Veröffentlichungstag und Bekanntmachung des Hinweises auf die Patenterteilung: **29.09.1993**
(21) Anmeldenummer: 89119672.7
(22) Anmeldetag: 24.10.1989
(51) Int. Cl.: B23Q 17/24

(54) **Vorrichtung zur Herstellung einer Profilschablone**
Device for producing a profile template
Dispositif de fabrication de gabarit de profilé

(30) Priorität: 28.10.1988 DE 8813579 U
(43) Veröffentlichungstag der Anmeldung: 02.05.1990
(73) Patentinhaber: Michael Weinig Aktiengesellschaft, D-97941 Tauberbischofsheim (DE)
(72) Erfinder: Weber, Rudolf, D-8702 Neubrunn-Böttigheim (DE)
(74) Vertreter: Jackisch-Kohl, Anna-Katharina

(56) Entgegenhaltungen:
- EP-A- 0 074 484
- DE-C- 3 215 188
- US-A- 2 887 827

## Beschreibung

Die Erfindung betrifft eine Vorrichtung zur Herstellung einer Profilschablone nach dem Oberbegriff des Anspruches 1.

Beispielsweise bei Holzbearbeitungsmaschinen werden Messerköpfe eingesetzt, die mit Profilmessern bestückt sind, mit denen Hölzer profiliert werden können. Diese Profilmesser werden nach Profilschablonen hergestellt, die ihrerseits nach einem vorgefertigten Muster hergestellt werden müssen. Zur Herstellung der Schablone wird ein Rohling verwendet, der an das Schablonenmuster angelegt wird. Dann wird mit einer Schleifscheibe die Profilkontur des Schablonenmusters abgefahren und hierbei entsprechend das Profil im Rohling hergestellt. Die Herstellung der Schablone mit einer solchen Vorrichtung erfordert große Sorgfalt, hohe Geschicklichkeit und viel Erfahrung.

Bei der gattungsgemäßen Vorrichtung (US-A-2 887 827) werden in den Bildschirm des Projektors die Profilkontur des Schablonenmusters und die Profilkontur der jeweils herzustellenden Profilschablone projiziert. Außerdem wird in den Bildschirm ein Teil des Werkzeuges projiziert, mit dem die Profilkontur der Profilschablone hergestellt wird.

Der Erfindung liegt die Aufgabe zugrunde, die gattungsgemäße Vorrichtung so auszubilden, daß mit ihr Schablonen genau hergestellt werden können, ohne daß hierzu die Bedienung der Vorrichtung Erfahrung und Geschick erfordert.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung wird ausschließlich die Kontur des Schablonenmusters vorzugsweise in stark vergrößertem Maßstab auf den Bildschirm des Projektors projiziert. Die Profilkontur der herzustellenden Profilschablone befindet sich außerhalb des Projektionsweges der Projektors, so daß sie nicht auf dem Bildschirm erscheint. Dadurch kann sich der Benutzer ausschließlich darauf konzentrieren, mit der Profilkontur des Schablonenmusters exakt die Markierung auf dem Bildschirm abzufahren. Die im Bildschirm befindliche Markierung entspricht der Schleifscheibe des Profilschablonensupports. Der Kopiersupport wird nun so eingestellt, daß die Profilkontur des Schablonenmusters im Bildschirm an der Markierung zu Beginn der Profilkontur anliegt. Da die beiden Supporte während der Herstellung der Profilschablone fest miteinander verbunden sind, wird bei dieser Einstellung in gleichem Maße die herzustellende Schablone so verstellt, daß die Schleifscheibe am Beginn der herzustellenden Profilkontur liegt. Der Benutzer der erfindungsgemäßen Vorrichtung kann nun sehr einfach die beiden Supporte so verstellen, daß die im Bildschirm sichtbare Profilkontur des Schablonenmusters an der Markierung entlang geführt wird. Diese Bewegung wird auf den Profilschablonensupport und damit auf die herzustellende Profilschablone übertragen, wobei die Profilkontur an der Profilschablone hergestellt wird. Auf dem Bildschirm des Projektors läßt sich die Verschiebebewegung wegen der vorzugsweise hohen Vergrößerung sehr einfach kontrollieren, so daß die Profilschablone ohne Schwierigkeiten auch von weniger geübten Kräften genau gefertigt werden kann. Da die Profilkontur auf den Bildschirm projiziert wird, ist ein Modell als Schablonenmuster nicht mehr erforderlich. Es reicht aus, wenn als Schablonenmuster ein transparentes Zeichnungsblatt verwendet wird, das die herzustellende Profilkontur zeigt. Diese Zeichnung kann dann beispielsweise im Durchlichtverfahren auf den Bildschirm des Projektors projiziert werden.

Weitere vorteilhafte Merkmale ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt in schematischer Darstellung eine erfindungsgemäße Schablonenprofiliereinrichtung.

Die Schablonenprofiliereinrichtung hat einen Schleifsupport 1, der fest mit einem Kopiersupport 2 verbunden ist. Der Schleifsupport 1 trägt einen Schleifdorn 3, der eine Spannvorrichtung 4 für die zu schleifende Profilschablone 5 aufweist. An ihr wird das Profil 6 mit einer Schleifscheibe 7 kopiergesteuert geschliffen. Der Schleifdorn 3 kann in Pfeilrichtung 9 auf dem Schleifsupport 1 gegen die Schleifscheibe 7 zugestellt werden.

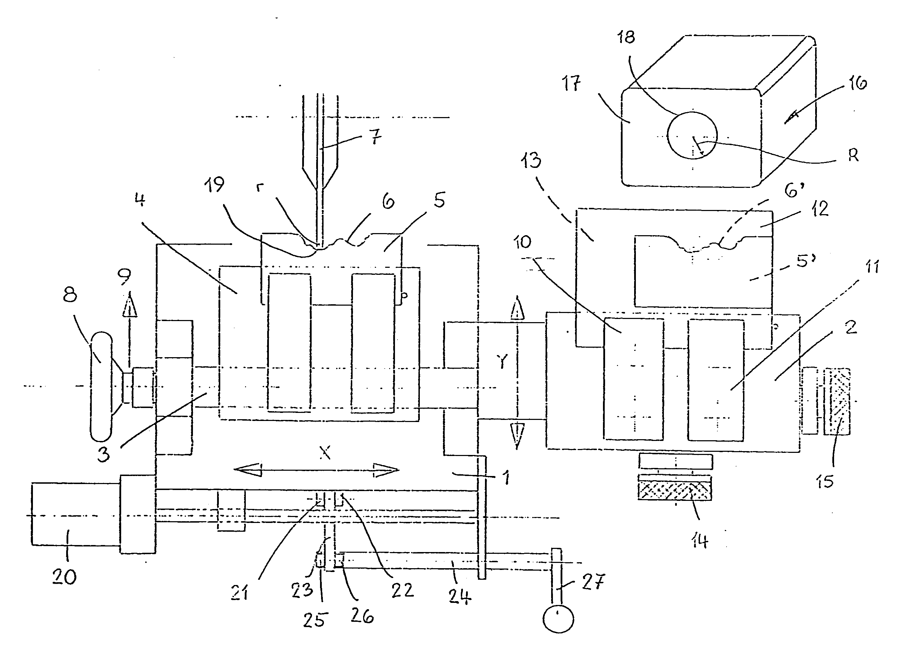

Der Kopiersupport 2 trägt zwei Halter 10, 11, mit denen zwei aus durchsichtigem Material, vorzugsweise Glas, bestehende Platten 12 auf dem Kopiersupport 2 gehalten werden können. Zwischen die Platten 12 ist ein transparentes Zeichnungsblatt 13 eingelegt, auf dem im Maßstab 1:1 die herzustellende Profilschablone 5′ gezeichnet ist. Die beiden Platten 12 ragen derart über den Kopiersupport 2, daß die Zeichnung 5′ außerhalb des Kopiersupportes liegt. Um die Halter 10, 11 mit den Platten 12 in X- und Y-Richtung verstellen zu können, sind zwei Stellräder 14 und 15 am Kopiersupport 2 gelagert.

Die Zeichnung 5′ zeigt genau die Profilkontur 6′, die an der Profilschablone 5 hergestellt werden soll.

Die Schablonenprofiliereinrichtung weist ferner einen Projektor 16 mit einem Bildschirm 17 auf. Er trägt eine Kreismarkierung 18, deren Radius R dem Radius r des Schleifscheibenmantels 19, multipliziert mit einem Vergrößerungsfaktor z, entspricht. Im Ausführungsbeispiel beträgt der Radius R das 20fache des Radius r des Schleifscheibenmantels 19.

Die Profilkontur 6′ der Zeichnung 5′ wird im Unterlichtverfahren im Maßstab z:1, im Ausführungsbeispiel 20:1, auf dem Bildschirm 17 des Projektors 16 abgebildet. Die Einheit aus Schleifsupport 1 und Kopiersupport 2 wird nun so in X- und in Y-Richtung bewegt, daß die Profilkontur 6′ der Zeichnung 5′ an der Kreismarkierung 18 des Bildschirms 17 entlanggeführt wird. Die Kreismarkierung 18 symbolisiert die Schleifscheibe 7. Beim Abfahren der Kreismarkierung 18 wird die Profilschablone 5 entsprechend der abgetasteten Profilkontur 6′ durch die Schleifscheibe 7 profiliert. Die Schablonenprofiliereinrichtung ist so eingestellt, daß der Abstand zwischen der Schleifscheibe 7 und dem Mittelpunkt der Kreismarkierung 18 gleich ist dem Abstand zwischen der Profilschablone 5 und der Zeichnung 5′. Die Schleifscheibe 7 profiliert somit beim Abfahren der Kreismarkierung 18 durch die Profilkontur 6′ in einem einzigen Verfahrensgang die Schablone 5 auf die gewünschte Profilkontur 6. Mit dieser Einrichtung läßt sich die Profilschablone 5 nach der Zeichnung 5′ im Maßstab 1:1 fertigen. Da die Platten 12 und das Zeichnungsblatt 13 transparent sind, kann im beschriebenen Durchlichtverfahren das Zeichnungsblatt 5′ auf den Bildschirm 17 des Projektors 16 projiziert werden. Anstelle des transparenten Zeichnungsblattes 13 kann beispielsweise auch ein Holzmuster im Maßstab 1:1 verwendet werden. In diesem Falle wird die Kontur dieses Holzmusters im Auflichtverfahren auf den Bildschirm 17 des Projektors 16 projiziert. Auch dann läßt sich die Profilkontur 6′ an der Kreismarkierung 18 leicht abfahren.

Zum Verstellen des Schleifsupportes 1 und des fest mit ihm verbundenen Kopiersupportes 2 ist ein vorzugsweise regelbarer Antriebsmotor 20 vorgesehen, der am Schleifsupport 1 angeordnet ist. Zur Verstellung in Y-Richtung ist am Schleifsupport 1 zwischen zwei Laschen 21, 22 das eine Ende eines Hebels 23 angelenkt, dessen anderes Ende zwischen zwei senkrecht von einer Welle 24 abstehenden Laschen 25, 26 angelenkt ist. An dem den Laschen 25, 26 gegenüberliegenden Ende ist drehfest ein radial abstehender Hebel 27 befestigt, mit dem die Welle 24 um ihre Achse gedreht werden kann. Beim Schwenken des Hebels 27 wird über die Hebel 23 der Schleifsupport 1 und damit auch der Kopiersupport 2 in Y-Richtung bewegt.

Während des Profiliervorganges wird die Einheit aus Schleifsupport 1 und Kopiersupport 3 durch den Antriebsmotor 20 in X-Richtung bewegt. Ist der Antriebsmotor 20 regelbar, besteht die Möglichkeit, bei weniger komplizierten Profilen 6 die Supporteinheit 1, 2 mit etwas höherer Geschwindigkeit in X-Richtung zu verfahren, während bei komplizierteren Profilen die Verfahrgeschwindigkeit herabgesetzt werden kann. Die Einstellung unterschiedlicher Geschwindigkeiten ist innerhalb eines einzigen Profiles möglich und besonders vorteilhaft. Es kann innerhalb eines Profiles 6 Bereiche geben, die sehr rasch abgefahren werden können, und Bereiche, die eine langsamere Verfahrgeschwindigkeit in X-Richtung erfordern, wie z. B. Steilkanten am Profil 6. Da mit dem Antriebsmotor 20 die Supporteinheit 1, 2 ständig durch den Antriebsmotor 20 in X-Richtung bewegt wird, muß der Benutzer der Schablonenprofiliereinrichtung mittels des Hebels 27 die Supporteinheit 1, 2 nur noch in Y-Richtung so bewegen, daß die Kreismarkierung 18 stets genau an der Profilkontur 6′ der Zeichnung 5′ anliegt.

Bei einer einfachen Ausführungsform ist es auch möglich, daß der Antriebsmotor 20 nicht regelbar ist, sondern die Supporteinheit 1, 2 mit einer konstanten, möglichst geringen Geschwindigkeit bewegt.

Es ist auch möglich, anstelle des Antriebsmotors 20 eine Handverstellung auch in X-Richtung vorzusehen. In diesem Fall muß die Bedienungsperson die Supporteinheit 1, 2 sowohl in X- als auch in Y-Richtung von Hand bewegen.

Ein wesentlicher Vorteil der Schablonenprofiliereinrichtung besteht darin, daß im Projektor 16 der Radius r des Schleifscheibenmantels 19 mit dem Vergrößerungsfaktor z abgebildet wird. Auch die Profilkontur 6′ der Zeichnung 5′ wird mit einem entsprechenden Vergrößerungsfaktor abgebildet. Wenn nun beim Abfahren der Profilkontur 6′ Ungenauigkeiten auftreten sollten, dann wirken sich diese Ungenauigkeiten bei der herzustellenden Profilkontur 6 nur unwesentlich aus, weil dort diese Ungenauigkeiten um den Vergrößerungsfaktor z geringer ausfallen als am Bildschirm 17.

Der Hebel 27 ist vorzugweise mit einer Klemme auf der Welle 24 befestigt. Dadurch besteht die Möglichkeit, den Hebel 27 gegenüber der Welle 24 so einzustellen, daß er je nach Größe der Bedienungsperson in der richtigen Höhe liegt. Außerdem kann dadurch das Übersetzungsverhältnis in Y-Richtung eingestellt werden. So muß in der einen Einstellung beispielsweise der Hebel 27 über einen größeren Winkelbereich geschwenkt werden, um einen bestimmten Y-Weg zu erzielen, während bei einer anderen Einstellung des Hebels 27 zur Welle 24 für den gleichen Y-Weg ein geringerer Schwenkweg erforderlich ist. Dadurch ist eine individuelle Anpassung sowohl hinsichtlich der Größe der Bedienungsperson als auch hinsichtlich deren Feinfühligkeit bzw. Geschicklichkeit möglich.

Mit den hergestellten Schablonen 5 werden in der Schleifmaschine die entsprechenden Profilmesser hergestellt.

Bevorzugt ist die beschriebene Schablonenprofiliereinrichtung Bestandteil der Schleifmaschine. Es ist aber möglich, die Schablonenprofiliereinrichtung als Zusatzeinrichtung zu verwenden.

Die Schleifscheibe 7 kann selbstverständlich je nach herzustellendem Profil 6 der Schablone 5 die unterschiedlichsten Profile aufweisen. Entsprechend ist auch die Markierung 18 auf dem Bildschirm 17 des Projektors 16 ausgebildet.

## Patentansprüche

1. Vorrichtung zur Herstellung einer Profilschablone (5), mit einem Halter (4) zur Befestigung der herzustellenden Profilschablone (5), der auf einem Profilschablonensupport (1) vorgesehen ist, der einem Werkzeug (7) zugeordnet und der mit einem Kopiersupport (2) fest verbunden ist, der gemeinsam mit dem Profilschablonensupport (1) bei der Herstellung der Profilschablone (5) verstellbar ist und der ein Schablonenmuster (5') trägt, dessen Profilkontur (6') auf einen Bildschirm (17) eines Projektors (16) projizierbar ist, dadurch gekennzeichnet, daß der Bildschirm (17) des Projektors (16) mit einer Markierung (18) versehen ist, längs der die Profilkontur (6') des Schablonenmusters (5') während der Herstellung der Profilschablone (5) mittels des Kopiersupportes (2) bewegbar ist, und daß die Profilkontur (6) der herzustellenden Profilschablone (5) sowie das als Schleifscheibe (7) ausgebildete Werkzeug außerhalb des Projektionsweges des Projektors (16) liegen.

2. Vorrichtung nach Anspruch 1,
dadurch gekennzeichnet, daß das Schablonenmuster (5') eine die herzustellende Schablone (5) vorzugsweise im Maßstab 1:1 zeigende Zeichnung auf einem transparenten Zeichnungsblatt ist.

3. Vorrichtung nach Anspruch 2,
dadurch gekennzeichnet, daß das transparente Zeichnungsblatt (5') zwischen zwei transparenten, vorzugweise aus Glas bestehenden Platten (12) liegt.

4. Vorrichtung nach Anspruch 1,
dadurch gekennzeichnet, daß das Schablonemuster ein der herzustellenden Schablone (5) vorzugweise im Maßstab 1:1 entsprechendes Modell, vorzugsweise ein Holzmuster, ist.

5. Vorrichtung nach einem der Ansprüche 1 bis 4,
dadurch gekennzeichnet, daß die Markierung (18) im Bildschirm (17) eine der Form des Mantels (19) einer Schleifscheibe (7) entsprechende Form hat.

6. Vorrichtung nach Anspruch 5,
dadurch gekennzeichnet, daß die Form der Markierung (18) um einen Vergrößerungsfaktor (z) größer ist als die Form des Schleifscheibenmantels (19).

7. Vorrichtung nach einem der Ansprüche 1 bis 6,
dadurch gekennzeichnet, daß die auf den Bildschirm (17) projizierte Profilkontur (6') des Schablonenmusters (5') um einen Vergrößerungsfaktor (z) größer ist als die herzustellende Profilkontur (6) der Schablone (5).

8. Vorrichtung nach einem der Ansprüche 1 bis 7,
dadurch gekennzeichnet, daß die Einheit aus Schleifsupport (1) und Kopiersupport (2) mit einem vorzugsweise regelbaren Antriebsmotor (20) in X-Richtung bewegbar ist.

9. Vorrichtung nach einem der Ansprüche 1 bis 8,
dadurch gekennzeichnet, daß zum Verstellen der Einheit aus Schleifsupport (1) und Kopiersupport (2) in Y-Richtung ein Handantrieb (23, 24, 27) vorgesehen ist.

10. Vorrichtung nach Anspruch 8 oder 9,
dadurch gekennzeichnet, daß der Antriebsmotor (20) am Schleifsupport (1) vorgesehen ist.

11. Vorrichtung nach Anspruch 9 oder 10,
dadurch gekennzeichnet, daß der Handantrieb (23, 24, 27) am Schleifsupport (1) angeordnet ist.

12. Vorrichtung nach einem der Ansprüche 9 bis 11,
dadurch gekennzeichnet, daß der Handantrieb eine mit dem Schleifsupport (1) verbundene Welle (24) aufweist, die mit einem Hebel (27) drehbar ist.

13. Vorrichtung nach Anspruch 12,
dadurch gekennzeichnet, daß die Welle (24) über einen weiteren, quer von ihr abstehenden Hebel (23) mit dem Schleifsupport (1) antriebsverbunden ist.

14. Vorrichtung nach Anspruch 12 oder 13,
dadurch gekennzeichnet, daß der Hebel (27) auf der Welle (24) verstellbar angeordnet ist.

15. Vorrichtung nach einem der Ansprüche 1 bis 14,
dadurch gekennzeichnet, daß der Abstand zwischen der Schleifscheibe (7) und der Markierung (18) im Bildschirm (17) gleich dem Abstand zwischen der Schablone (5) und dem Schablonenmuster (5') ist.

## Claims

1. Apparatus for producing a profile template (5), with a holder (4) for fixing the profile template (5) to be produced, which holder (4) is provided on a profile template support (1), with which a tool (7) is associated and which is securely connected to a copier support (2), which is movable jointly with the profile template support (1) during the production of the profile template (5) and which supports a template pattern (5'), whereof the profile contour (6') can be projected onto a screen (17) of a projector (16), characterised in that the screen (17) of the projector (16) is provided with a marking (18), along which the profile contour (6') of the template pattern (5') can be moved by means of the copier support (2) during the production of the profile template (5), and that the profile contour (6) of the profile template (5) to be produced as well as the tool constructed as a grinding wheel (7) lie outside the projection path of the projector (16).

2. Apparatus according to Claim 1, characterised in that the template pattern (5') is a drawing on a transparent drawing sheet showing the template (5) to be produced preferably on a scale of 1:1.

3. Apparatus according to Claim 2, characterised in that the transparent drawing sheet (5') lies between two transparent sheets (12) preferably consisting of glass.

4. Apparatus according to Claim 1, characterised in that the template pattern is a model, preferably a wooden models corresponding to the template (5) to be produced preferably on a scale of 1:1.

5. Apparatus according to one of Claims 1 to 4, characterised in that the marking (18) in the screen (17) has a shape corresponding to the shape of the surface (19) of a grinding wheel (7).

6. Apparatus according to Claim 5, characterised in that the shape of the marking (18) is greater than the shape of the grinding wheel surface (19) by an enlargement factor (z).

7. Apparatus according to one of Claims 1 to 6, characterised in that the profile contour (6') of the template pattern (5') projected on the screen (17) is greater than the profile contour (6) of the template (5) to be produced by an enlargement factor (z).

8. Apparatus according to one of Claims 1 to 7, characterised in that the unit consisting of the grinding support (1) and copier support (2) can be moved in the X-direction by a preferably adjustable drive motor (20).

9. Apparatus according to one of Claims 1 to 8, characterised in that a hand drive (23, 24, 27) is provided for moving the unit consisting of the grinding support (1) and the copier support (2) in the Y-direction.

10. Apparatus according to Claim 8 or 9, characterised in that the drive motor (20) is provided on the grinding support (1).

11. Apparatus according to Claim 9 or 10, characterised in that the hand drive (23, 24, 27) is located on the grinding support (1).

12. Apparatus according to one of Claims 9 to 11, characterised in that the hand drive comprises a shaft (24) connected to the grinding support (1), which shaft can be rotated by a lever (27).

13. Apparatus according to Claim 12, characterised in that the shaft (24) has a driving connection to the grinding support (1) by way of a further lever (23) projecting transversely therefrom.

14. Apparatus according to Claim 12 or 13, characterised in that the lever (27) is arranged to be adjustable on the shaft (24).

15. Apparatus according to one of Claims 1 to 14, characterised in that the distance between the grinding wheel (7) and the marking (18) in the screen (17) is equal to the distance between the template (5) and the template pattern (5').

## Revendications

1. Dispositif de fabrication d'un gabarit profilé (5), comportant pour la fixation du gabarit profilé (5) à fabriquer un support (4) qui est prévu sur un chariot portegabarit (1) auquel est associé un outil (7) et est solidaire d'un chariot de copiage (2) qui est mobile conjointement avec le chariot porte-gabarit (1) pour la fabrication du gabarit profilé (5) et porte un modèle de gabarit (5') dont le contour de profil (6') peut être projeté sur un écran (17) d'un projecteur (16), caractérisé par le fait que l'écran (17) du projecteur (16) est pourvu d'une marque (18) le long de laquelle le contour de profil (6') du modèle de gabarit (5') peut être déplacé au moyen du chariot de copiage (2) pendant la fabrication du gabarit profilé (5), et que le contour de profil (6) du gabarit profilé (5) à fabriquer et l'outil, constitué d'une meule (7), sont en dehors de la voie de projection du projecteur (16).

2. Dispositif selon la revendication 1, caractérisé par le fait que le modèle de gabarit (5') est un dessin fait sur une feuille transparente qui représente de préférence à l'échelle 1/1 le gabarit (5) à fabriquer.

3. Dispositif selon la revendication 2, caractérisé par le fait que la feuille de dessin transparente (5') est placée entre deux plaques transparentes (12) de préférence en verre.

4. Dispositif selon la revendication 1, caractérisé par le fait que le modèle de gabarit est un modèle de préférence en bois correspondant, de préférence à l'échelle 1/1, au gabarit (5) à fabriquer.

5. Dispositif selon l'une des revendications 1 à 4, caractérisé par le fait que la marque (18) prévue sur l'écran (17) a une forme correspondant à celle du bord extérieur (19) d'une meule (7).

6. Dispositif selon la revendication 5, caractérisé par le fait que la marque (18) est plus grande (facteur d'agrandissement z) que le bord extérieur (19) de la meule.

7. Dispositif selon l'une des revendications 1 à 6, caractérisé par le fait que le contour de profil (6') projeté sur l'écran (17) du modèle de gabarit (5') est plus grand (facteur d'agrandissement z) que le contour de profil à réaliser (6) du gabarit (5).

8. Dispositif selon l'une des revendications 1 à 7, caractérisé par le fait que le bloc formé du chariot de rectification (1) et du chariot de copiage (2) peut être mû dans la direction X par un moteur (20) de préférence à vitesse réglable.

9. Dispositif selon l'une des revendications 1 à 8, caractérisé par le fait que pour le déplacement dans la direction Y du bloc formé du chariot de rectification (1) et du chariot de copiage (2) est prévue une commande manuelle (23, 24, 27).

10. Dispositif selon l'une des revendications 8 et 9, caractérisé par le fait que le moteur (20) est prévu sur le chariot de rectification (1).

11. Dispositif selon l'une des revendications 9 et 10, caractérisé par le fait que la commande manuelle (23, 24, 27) est prévue sur le chariot de rectification (1).

12. Dispositif selon l'une des revendications 9 à 11, caractérisé par le fait que la commande manuelle présente un arbre (24) lié au chariot de rectification (1) qu'on peut faire tourner au moyen d'un levier (27).

13. Dispositif selon la revendication 12, caractérisé par le fait que l'arbre (24) est accouplé au chariot de rectification (1) par un autre levier (23) saillant à angle droit de lui.

14. Dispositif selon l'une des revendications 12 et 13, caractérisé par le fait que le levier (27) est monté mobile sur l'arbre (24).

15. Dispositif selon l'une des revendications 1 à 14, caractérisé par le fait que la distance entre la meule (7) et la marque (18) prévue sur l'écran (17) est égale à la distance entre le gabarit (5) et le modèle de gabarit (5').
